# EUROPÄISCHE PATENTSCHRIFT

(11) **EP 3 214 583 B1**
(45) Veröffentlichungstag und Bekanntmachung des Hinweises auf die Patenterteilung: **03.07.2019**
(21) Anmeldenummer: 17159257.9
(22) Anmeldetag: 03.03.2017
(51) Int. Cl.: G06K 19/077

(54) **WERT- ODER SICHERHEITSDOKUMENT MIT EINEM SENSOR ZUM ERFASSEN EINER NUTZERINTERAKTION UND EINER ELEKTRONISCHEN SCHALTUNG**
VALUABLE DOCUMENT OR SECURITY DOCUMENT COMPRISING A SENSOR FOR DETECTING USER INTERACTION AND AN ELECTRONIC CIRCUIT
DOCUMENT DE SÉCURITÉ OU DE VALEUR COMPRENANT UN CAPTEUR DE DÉTECTION D'UNE INTERACTION D'UTILISATEUR ET D'UN CIRCUIT ÉLECTRONIQUE

(30) Priorität: 04.03.2016 DE 102016203610
(43) Veröffentlichungstag der Anmeldung: 06.09.2017
(73) Patentinhaber: Bundesdruckerei GmbH, 10969 Berlin (DE)
(72) Erfinder: Fischer, Jörg, 13053 Berlin (DE); Trölenberg, Stefan, 15749 Mittenwalde OT Ragow (DE); Fritze, Frank, 12437 Berlin (DE); Tietke, Markus, 12439 Berlin (DE); Hille, Jakob, 10247 Berlin (DE); Kraus, Micha, 10827 Berlin (DE); Zach, Jelena, 80797 München (DE); Beuthel, Marie, 12043 Berlin (DE); Wohlauf, Anne, 13359 Berlin (DE)
(74) Vertreter: Patentanwälte Bressel und Partner mbB

(56) Entgegenhaltungen:
- EP-A2- 2 824 543
- CN-U- 202 351 913
- CN-Y- 200 953 157
- US-A1- 2014 367 474
- US-B1- 9 230 255

## Beschreibung

Die vorliegende Erfindung betrifft ein Wert- oder Sicherheitsdokument, insbesondere ein Identifikationsdokument (ID-Dokument), beispielsweise eine Identifikationskarte (ID-Karte), mit einem Sensor zum Erfassen mindestens einer Nutzerinteraktion und einer elektronischen Schaltung zum Auswerten der erfassten Nutzerinteraktion.

Wert- oder Sicherheitsdokumente dienen beispielsweise zur Identifikation von Personen und/oder Gegenständen und/oder zum bargeldlosen Zahlungsverkehr. Sie weisen unter anderem visuell erkennbare Merkmale auf, die sie eindeutig einer Person und/oder einem Gegenstand und/oder einem Geld- oder Wertpapierkonto zuordnen und die nur dem Dokumenteninhaber erlauben, sich auszuweisen bzw. über den Gegenstand bzw. das Konto zu verfügen und beispielsweise Geldtransfers zu veranlassen. Aus diesem Grunde müssen diese Dokumente gegen Missbrauch geschützt werden. Hierzu können sie beispielsweise einen Sensor, über den sich der Benutzer beim Gebrauch der Karte authentifizieren kann, sowie elektronische Schaltungen, insbesondere einfache Speicherschaltkreise, Mikroprozessoren und System-on-Card-Systeme mit integrierten Lautsprechern, Displays und biometrischen Sensoren, aufweisen.

Die US 9,230,255 B1 beschreibt eine Karte mit einer integrierten Schaltung, die über einen nutzerbedienbaren Schalter für die Verwendung mit unterschiedlichen Konten eingestellt werden kann. Die Auswahl des entsprechenden Kontos wird über eine zugeordnete LED angezeigt.

Die EP 2 824 543 A2 beschreibt ein Dokument mit einer integrierten Anzeigevorrichtung. Über ein Verkippen um unterschiedliche Achsen können auf der Anzeigevorrichtung unterschiedliche Zeichen zur Anzeige gebracht und ausgewählt werden. Dies kann beispielsweise zur Eingabe einer PIN genutzt werden.

Die US 2014/0367474 A1 beschreibt eine Anzeigekarte, die eine einfache Anzeige, eine spezialisierte Tastatur und Signalisierungsleuchtdioden aufweist. Die Karte kann beispielsweise als Zahlkarte verwendet werden.

Bekannte Systeme sind jedoch oft zu teuer, nicht herstellbar oder weisen einen zu hohen Energiebedarf auf, um in Wert- oder Sicherheitsdokumente integrierbar zu sein. Trotzdem ist es notwendig, nach einem Erfassen einer Nutzerinteraktion an dem Wert- oder Sicherheitsdokument einem Nutzer eine Rückmeldung darüber zu geben, ob eine Überprüfung bzw. eine Identifikation positiv oder negativ ausgefallen ist.

Der Erfindung liegt somit das Problem zu Grunde, ein Wert- oder Sicherheitsdokument und ein Verfahren zu schaffen, bei dem eine benutzerfreundliche einfache Schnittstelle zur Rückmeldung nach dem Erfassen einer Nutzerinteraktion zur Verfügung steht.

Die technische Aufgabe wird erfindungsgemäß durch ein Wert- oder Sicherheitsdokument mit den Merkmalen des Patentanspruchs 1 und ein Verfahren mit den Merkmalen des Patentanspruchs 14 gelöst. Vorteilhafte Ausgestaltungen der Erfindung ergeben sich aus den Unteransprüchen.

### Definitionen

Soweit in der Beschreibung und in den Ansprüchen der vorliegenden Anmeldung der Begriff ,Wert- oder Sicherheitsdokument verwendet wird, ist darunter beispielsweise ein Personalausweis, Führerschein, ein Zugangskontrollausweis oder ein anderes ID-Dokument, beispielsweise eine ID-Karte, ein Fahrzeugschein, eine Scheck-, Bank-, Kredit- oder Barzahlungskarte, Kundenkarte, Gesundheitskarte, ein Firmenausweis, Berechtigungsnachweis, Mitgliedsausweis, Fahrzeugschlüssel, Gesundheits- oder Fitness-Tracker, Geschenk- oder Einkaufsgutschein oder ein sonstiger Berechtigungsnachweis oder noch ein anderes Dokument zu verstehen. Das Wert- oder Sicherheitsdokument ist insbesondere eine Smartcard, wenn das Dokument in Kartenform vorliegt. Das Wert- oder Sicherheitsdokument kann im Format ID-1, ID-2, ID-3 oder in irgendeinem anderen normierten oder nicht normierten Format vorliegen. Vorzugsweise ist das Format des Dokuments ID-1. Das Wert- oder Sicherheitsdokument soll den normierten Anforderungen genügen, beispielsweise gemäß ISO 10373, ISO/IEC 7810, ISO 14443 in der jeweils am Anmeldetag dieser Schutzrechtsanmeldung verabschiedeten und gültigen Version, sowie gegebenenfalls der noch im Entwurf befindlichen Norm ISO/DIS 18328-2.

Leuchtmittel sollen im Folgenden Licht erzeugende und emittierende Einrichtungen sein, welche elektrisch betrieben und angesteuert werden.

Im Folgenden soll ein Lichtmuster ein von einem menschlichen Betrachter und/oder einer maschinellen optischen Erfassungseinrichtung erfassbares optisches Signal darstellen. Das Lichtmuster kann in seiner Ausbildung einen mehrdimensionalen Parameterraum aufspannen, insbesondere können dabei zeitliche, räumliche, aber auch spektrale Parameter und Parameter, welche Helligkeitswerte und/oder Helligkeitsverteilungen oder - änderungen beschreiben, oder Gradienten der Parameter definiert sein.

Ein Signalmuster soll im Folgenden ein elektrisches Steuersignal zum Erzeugen des Lichtmusters bezeichnen. Es kann beliebig komplex ausgebildet sein und beschreibt insbesondere statische und/oder dynamische Anteile im Parameterraum des Lichtmusters.

Eine Nutzerinteraktion soll eine Wechselwirkung eines Benutzers des Wert- oder Sicherheitsdokumentes mit dem Wert- oder Sicherheitsdokument bezeichnen, bei denen Informationen bzw. Daten über den Benutzer erfasst werden und/oder Informationen bzw. Daten von dem Benutzer abgefragt werden. Eine solche Wechselwirkung kann insbesondere haptischer und/oder nicht haptischer Natur sein.

Sofern von einer biometrischen Information gesprochen wird, soll dieser Begriff im Folgenden eine an einem Lebewesen, insbesondere an einem Menschen, messbare Information bezeichnen. Dabei sollen insbesondere jene physisch ausgebildeten Charakteristika bezeichnet sein, welche eine eindeutige Identifikation eines Individuums aus einer Menge von Individuen erlauben.

### Bevorzugte Ausführungsformen

Insbesondere wird ein Wert- oder Sicherheitsdokument geschaffen, umfassend einen Dokumentenkörper mit einer Oberseite und einer der Oberseite gegenüberliegenden Unterseite, einer elektronischen Schaltung und mindestens einem Sensor zum Erfassen mindestens einer Nutzerinteraktion, wobei der Dokumentenkörper mindestens zwei über die Oberseite und die Unterseite visuell erfassbare mit der elektronischen Schaltung verbundene und durch diese individuell ansteuerbare Leuchtmittel zum Erzeugen eines Lichtmusters aufweist, und wobei die elektronische Schaltung derart ausgebildet ist, die mindestens eine Nutzerinteraktion auszuwerten, basierend auf der ausgewerteten Nutzerinteraktion ein Signalmuster bereitzustellen und auf Grundlage des Signalmusters das Lichtmuster an den mindestens zwei individuell ansteuerbaren Leuchtmitteln auszugeben.

Ferner wird ein Verfahren zum Ausgeben einer optischen Rückmeldung an einem Wert- oder Sicherheitsdokument zur Verfügung gestellt, umfassend die Schritte: Erfassen mindestens einer Nutzerinteraktion durch mindestens einen Sensor auf oder an einem Dokumentenkörper des Wert- oder Sicherheitsdokumentes, Auswerten der mindestens einen Nutzerinteraktion durch eine elektronische Schaltung des Dokumentenkörpers, Bereitstellen eines Signalmusters zum Erzeugen eines Lichtmusters für mindestens zwei über eine Oberseite und eine Unterseite des Dokumentenkörpers visuell erfassbare individuell ansteuerbare Leuchtmittel durch die elektronische Schaltung, wobei das Signalmuster auf Grundlage der ausgewerteten Nutzerinteraktion bereitgestellt wird, Ausgeben einer optischen Rückmeldung in Form des Lichtmusters durch individuelles Ansteuern der mindestens zwei individuell ansteuerbaren Leuchtmittel gemäß des bereitgestellten Signalmusters durch die elektronische Schaltung.

Die Kernidee der Erfindung ist, eine Nutzerinteraktion direkt mit dem Wert- oder Sicherheitsdokument zu erfassen, die bei der Nutzerinteraktion erfassten Daten durch die elektronische Schaltung im Wert- oder Sicherheitsdokument mit dort gespeicherten vorbestimmten Daten zu überprüfen und in Abhängigkeit des Überprüfungsergebnisses eine optische Rückmeldung in Form eines Lichtmusters mittels individuell ansteuerbarer Leuchtmittel auszugeben. Die Leuchtmittel sind dabei auf, in oder an dem Wert- oder Sicherheitsdokument ausgebildet, so dass diese über eine Oberseite und eine Unterseite des Dokumentenkörpers visuell erfassbar sind.

Ein Vorteil der Erfindung ist, dass es prinzipiell keinen Austausch von elektronisch kodierten Daten mit der Umwelt geben muss. Sämtliche sicherheitsrelevanten Daten können auf dem Wert- oder Sicherheitsdokument selber gespeichert sein. Die optische Rückmeldung als Reaktion auf die Nutzerinteraktion erlaubt es einem Benutzer, beispielsweise dem Inhaber des Wert- oder Sicherheitsdokumentes, oder einer mit einer Sicherheitsaufgabe betrauten anderen Person, beispielsweise einem Grenzbeamten etc., auf einfache Weise und unmittelbar die Nutzerinteraktion durch eine Sichtkontrolle auf ihre Richtigkeit zu überprüfen. So kann auf einfache Weise überprüft werden, ob die Identität des Inhabers des Wert- oder Sicherheitsdokumentes mit den in dem Wert- oder Sicherheitsdokument gespeicherten Daten übereinstimmt.

Dadurch, dass die Rückkopplung lediglich optisch erfolgt, prinzipiell also keine elektronische oder drahtlose Kommunikationsverbindung zur Außenwelt hergestellt werden muss, wird ein zusätzlicher Schutz gegenüber einer Attacke auf die in dem Wert- oder Sicherheitsdokument hinterlegten Daten erreicht. Es ist daher möglich, die optische Rückmeldung sowohl durch einen menschlichen Betrachter als auch maschinell zu erfassen und auszuwerten.

Zur einfachen Übermittlung und um menschlichen Betrachtern die Möglichkeit zu geben, auf einfache Weise die ausgegebene optische Rückmeldung zu überprüfen, ist es wünschenswert, Lichtmuster auszugeben, welche einfach erfassbar und einfach zu interpretieren sind. Insbesondere stellen beispielsweise Lichtmuster, bei denen eine Menge von Leuchtmitteln gleichzeitig Licht emittieren, eine einfach zu erfassende und zu verstehende optische Rückmeldung dar. In einer vorteilhaften Ausführungsform ist deshalb vorgesehen, dass der Dokumentenkörper mindestens ein weiteres über die Oberseite und/oder die Unterseite visuell erfassbares individuell ansteuerbares Leuchtmittel aufweist, wobei das mindestens eine weitere Leuchtmittel mit mindestens einem der mindestens zwei individuell ansteuerbaren Leuchtmittel gekoppelt ist, so dass diese zeitgleich oder quasi zeitgleich angesteuert werden können. Auf diese Weise können beispielsweise mehrere Leuchtmittel so miteinander gekoppelt und anschließend angesteuert werden, dass sich im Lichtmuster bestimmte geometrische Muster ausbilden lassen. Zum Beispiel kann ein solches geometrisches Muster ein Buchstabe oder eine geometrische Figur sein.

Die technische Realisierung bei der quasi zeitgleichen Ansteuerung kann dabei beispielsweise so erfolgen, dass die Leuchtmittel so schnell sequenziell angesteuert werden, dass das menschliche Auge die sequentielle Ansteuerung nicht wahrnimmt. Das menschliche Auge nimmt dann nur wahr, dass die Leuchtmittel gleichzeitig leuchten. Dies bietet den technischen Vorteil, dass die elektronische Schaltung zur Ansteuerung der Leuchtmittel, auch Treiberschaltung genannt, einfacher aufgebaut sein kann und ferner ein reduzierter Energieverbrauch erreicht werden kann. Ein geringerer Energieverbrauch geht in der Regel mit einem verringerten maximalen Strom einher.

Es können aber beispielsweise auch Lichtmuster erzeugt werden, bei denen jeweils nur jedes zweite von benachbarten Leuchtmitteln angesteuert wird und entsprechend leuchtet.

Eine besonders deutliche optische Rückmeldung auf eine Nutzerinteraktion lässt sich erreichen, wenn das Lichtmuster eine farbliche Komponente aufweist. So kann beispielsweise vorgesehen sein, dass bei einem für die Identifikation eines Inhabers des Wert- oder Sicherheitsdokuments positiven Ergebnisses eine optische Rückmeldung ausgegeben wird, welche Licht lediglich im grünen spektralen Bereich aufweist, wohingegen bei einem negativen Ergebnis eine optische Rückmeldung ausgegeben wird, welche Licht lediglich im roten spektralen Bereich aufweist. So ist es für den Inhaber oder einen anderen Benutzer oder Betrachter sofort zu erfassen, wie das Ergebnis der Nutzerinteraktion ausgefallen ist. Deshalb ist in einer vorteilhaften Ausführungsform vorgesehen, dass zumindest ein Teil der mindestens zwei individuell ansteuerbaren Leuchtmittel ein im Vergleich zu einem anderen Teil der mindestens zwei individuell ansteuerbaren Leuchtmittel unterschiedliches Spektrum emittiert. Beispielsweise kann ein Leuchtmittel ein Spektrum emittieren, welches einen grünen Farbeindruck hervorruft, während ein anderes Leuchtmittel ein Spektrum emittiert, welches einen roten Farbeindruck hervorruft. Zusätzlich kann vorgesehen sein, dass die Leuchtmittel von der elektronischen Schaltung derart angesteuert werden, dass diese blinken. So kann beispielsweise eine farblich wechselnde blinkende Abfolge (rot - grün - rot) als optische Rückmeldung realisiert werden.

Ein mittels der elektronischen Schaltung in dem Wert- oder Sicherheitsdokument besonders einfach zu integrierendes und ansteuerbares Leuchtmittel stellen halbleiterbasierte Leuchtmittel dar. Diese haben ferner noch den Vorteil, dass sie einen geringen Energiebedarf haben, so dass diese effizient betrieben werden können, und schnelle Schaltzeiten ermöglichen, so dass auch schnelle Lichtmuster realisierbar sind. In einer besonders vorteilhaften Ausführungsform ist deshalb vorgesehen, dass die mindestens zwei individuell ansteuerbaren Leuchtmittel jeweils als Leuchtdiode (LED) oder als organische Leuchtdiode (OLED) ausgebildet sind.

Um besonders ansprechende und/oder komplexe Lichtmuster ausbilden zu können, können beispielsweise Farbwechsel der Leuchtmittel gewünscht sein. In einer weiteren vorteilhaften Ausführungsform ist deshalb vorgesehen, dass mindestens eines der mindestens zwei individuell ansteuerbaren Leuchtmittel derart ausgebildet ist, das von diesem emittierte Spektrum bei entsprechender Ansteuerung durch die elektronische Schaltung ändern zu können. In dieser Ausführungsform lassen sich somit Farbwechsel realisieren, beispielsweise ein Umschalten von grün nach rot oder umgekehrt. Die emittierte Farbe ist dann Teil des Signalmusters, welches durch die elektronische Schaltung zur Steuerung der Leuchtmittel bereitgestellt wird.

Sind die einzelnen Leuchtmittel ausreichend nah beieinander positioniert, so lassen sich punktuell für einen menschlichen Betrachter nahezu beliebige Farbeindrücke schaffen durch Ausnutzen einer Farbaddition, beispielsweise durch Verwendung bzw. Ansteuern entsprechender Helligkeitswerte, sofern als Leuchtmittel die drei Grundfarben Rot, Grün und Blau (RGB) vorgesehen sind. Dabei ist stets vorgesehen, dass die Leuchtmittel jeweils individuell als solche punktuell wahrnehmbar sind, im Gegensatz zu einem Display, bei dem die einzelnen Pixel derart dicht beieinander angeordnet sind, dass diese nicht einzeln, sondern nur als insgesamt zusammenhängende Fläche wahrgenommen werden.

Es kann dabei jedoch vorgesehen sein, dass ein einzelnes Leuchtmittel mehrere halbleiterbasierten Leuchtdioden jeweils unterschiedlicher Farbe aufweist. Mittels einer Farbaddition kann dann eine nahezu beliebige Farbwahrnehmung bei einem Betrachter mittels des einzelnen Leuchtmittels hervorgerufen werden.

Eine besonders sichere Überprüfung der Identität eines Inhabers oder Benutzers eines Wert- oder Sicherheitsdokumentes lässt sich durch eine Überprüfung einer biometrischen Information dieses Benutzers erreichen. Die biometrische Information kann in der Regel eineindeutig dem jeweiligen Individuum zugeordnet werden, so dass ein Überprüfungsergebnis ebenfalls eindeutig ist und das entsprechende Individuum sicher identifiziert werden kann. In einer vorteilhaften Ausführungsform ist deshalb vorgesehen, dass der mindestens eine Sensor ein biometrischer Sensor zum Erfassen einer biometrischen Information ist, und wobei die Nutzerinteraktion ein Erfassen einer biometrischen Information umfasst.

Ein besonders einfach auf einem Wert- oder Sicherheitsdokument zu realisierender biometrischer Sensor ist ein Sensor zum Erfassen eines Fingerabdruckes. Das Wert- oder Sicherheitsdokument ist plan ausgebildet und somit ideal geeignet, einen flächigen Bereich auf einer Ober- oder Unterseite bereit zu stellen, der dazu ausgebildet ist, den Fingerabdruck eines auf den flächigen Bereich aufgelegten Fingers zu erfassen. In einer weiteren vorteilhaften Ausführungsform ist deshalb vorgesehen, dass der biometrische Sensor ein Fingerabdrucksensor zum Erfassen eines Fingerabdrucks ist, wobei die Nutzerinteraktion ein Erfassen eines Fingerabdruckes umfasst.

Als biometrischer Sensor kann aber auch eine optische Erfassungseinrichtung dienen, beispielsweise eine Kamera, über die biometrische Informationen eines Nutzers erfasst werden.

Neben biometrischen Informationen sind Nutzerinteraktionen besonders sicher, bei denen ein Benutzer eine Information preisgeben muss, welche nur dem Benutzer bekannt ist. Eine solche Nutzerinteraktion kann beispielsweise über entsprechend ausgebildete und der zu erfassenden Nutzerinteraktion angepasste Schaltelemente erfasst werden. Deshalb ist in einer vorteilhaften Ausführungsform vorgesehen, dass der mindestens eine Sensor mindestens ein haptisch betätigbares Schaltelement umfasst. Über dieses mindestens eine haptisch betätigbare Schaltelement können verschiedene Nutzerinteraktionen erfasst werden, beispielsweise, indem der Benutzer mittels eines Fingers oder eines anderen Betätigungselementes die Schaltelemente einzeln oder in einer vorgegebenen Reihenfolge betätigt. Das mindestens eine haptisch betätigbare Schaltelement kann dabei derart ausgebildet sein, dass es von einem Nutzer haptisch erfassbar oder haptisch nicht erfassbar ist, beispielsweise lediglich visuell wahrgenommen werden kann.

Die Schaltelemente können beispielsweise mit einzelnen Buchstaben oder Symbolen korrespondieren. Insbesondere ist deshalb in einer vorteilhaften Ausführungsform vorgesehen, dass das mindestens eine haptische betätigbare Schaltelement als Tastatur zum Erfassen einer Zeichenfolge ausgebildet ist, wobei die Nutzerinteraktion ein Erfassen einer Zeichenfolge umfasst. Eine solche Zeichenfolge kann beispielsweise ein PIN-Code oder auch eine numerische oder alphanumerische Zeichenfolge sein, beispielsweise ein individuell gewähltes oder von Behörden, Banken etc. bereitgestelltes Passwort, welches dem Benutzer zugeordnet ist und diesen eindeutig identifiziert oder autorisiert. Einem Schaltelement können auch mehrere alphanumerische Zeichen zugleich zugeordnet sein, wie dies beispielsweise bei Telefontastaturen üblich ist.

Die Leuchtmittel können unterschiedlich auf dem Wert- oder Sicherheitsdokument angeordnet sein. Sind im Rahmen einer optischen Rückmeldung mehrere Leuchtmittel logisch miteinander verknüpft, so können sie benachbart angeordnet werden oder es werden geometrische Figuren gewählt, welche als solche in ihrer Gesamtheit erfassbar und zu erkennen sind.

In einer weiteren vorteilhaften Ausführungsform ist vorgesehen, dass zumindest ein Teil der mindestens zwei individuell ansteuerbaren Leuchtmittel gleichmäßig verteilt entlang einer geschlossenen Kontur angeordnet ist. Eine solche geschlossene Kontur kann beispielsweise ein Kreis, ein Quadrat, ein Rechteck, ein Dreieck, ein Polygonzug oder eine beliebig ausgebildete geschlossene geometrische Figur sein

Bei der Wahl der Anordnung ist es insbesondere wünschenswert, wenn ein logischer Zusammenhang zwischen dem mindestens einen Sensor und der optischen Rückmeldung durch die mindestens zwei individuell ansteuerbaren Leuchtmittel sofort durch einen Benutzer erfassbar ist. Eine optische Rückmeldung wird dann unmittelbar und intuitiv mit der an dem mindestens einen Sensor durchgeführten Nutzerinteraktion verknüpft. In einer besonders vorteilhaften Ausführungsform ist deshalb vorgesehen, dass die geschlossene Kontur den mindestens einen Sensor umlaufend umschließt. Auf diese Weise wird ein logischer Zusammenhang durch räumliche Nähe vorgegeben und die optische Rückmeldung kann sofort und intuitiv dem mindestens einen Sensor und der an diesem mindestens einen Sensor durchgeführten Nutzerinteraktion zugeordnet werden. Ist der mindestens eine Sensor beispielsweise ein Fingerabdrucksensor, so kann die geschlossene Kontur ein Kreis sein, auf dem die Leuchtmittel um den Fingerabdrucksensor in gleichmäßigen Abständen angeordnet sind.

In einer weiteren vorteilhaften Ausführungsform ist vorgesehen, dass zumindest ein Teil der mindestens zwei individuell ansteuerbaren Leuchtmittel auf Gitterpunkten eines regelmäßigen zweidimensionalen Gitters angeordnet ist. Durch eine solche Anordnung wird es ermöglicht, mittels des Lichtmusters komplexe Muster zu erzeugen und dadurch mehrere der individuell ansteuerbaren Leuchtmittel umfassende Symbole, Pfeile, Piktogramme oder Zeichen darzustellen. Ein solches Gitter kann beispielsweise eine 6 x 9-Matrix sein und kann entweder nur auf einem Teil oder auf der gesamten Ober- und/oder Unterseite des Dokumentenkörpers bzw. des Wert- oder Sicherheitsdokumentes ausgebildet sein. Im Gegensatz zu einem Display, sind die Leuchtmittel auf den einzelnen Punkten des Gitters dabei einzeln und punktuell ausgebildet und als solche einzeln wahrnehmbar.

Insbesondere kann vorgesehen sein, dass die einzelnen Leuchtmittel im nicht betriebenen Zustand nicht erkennbar sind. Dieses lässt sich beispielsweise erreichen, indem die Leuchtmittel in einer innenliegenden Schicht des Dokumentenkörpers angeordnet werden und die Bereiche, an denen sich die Leuchtmittel befinden, mit einer transluzenten Farbe bedeckt werden. Dadurch kann die Oberseite bzw. die Unterseite des Dokumentenkörpers ohne erhabene durch die Leuchtmittel hervorgerufene Strukturen ausgebildet werden, so dass die Punkte des Gitters und die Leuchtmittel im nicht betriebenen Zustand weder visuell, noch haptisch wahrnehmbar sind. Erst bei einem Betrieb der Leuchtmittel tritt Licht durch die transluzenten Farben aus dem Dokumentenkörper aus, so dass die Leuchtmittel bzw. deren Positionen auf dem Gitter sichtbar werden.

Zum Betrieb des Sensors, der elektronischen Schaltung und der mindestens zwei individuell ansteuerbaren Leuchtmittel ist elektrische Energie notwendig. Diese kann beispielsweise über entsprechende Kontakte an oder auf dem Dokumentenkörper des Wert- oder Sicherheitsdokuments von einer externen Energiequelle bereitgestellt werden oder über eine in dem Wert- oder Sicherheitsdokument verbaute Energiequelle, beispielsweise einer Batterie, zur Verfügung gestellt werden.

Es ist jedoch wünschenswert, den Aufwand für die Energieversorgung möglichst gering zu halten. Elektrische Kontakte können bei oftmaligem Gebrauch verschleißen und eine in dem Wert- oder Sicherheitsdokument bereitgestellte Energiequelle kann vor einer vorgesehenen Lebensdauer des Wert- oder Sicherheitsdokumentes versiegen. Eine mögliche Lösung stellt ein Einkoppeln von Energie in Form eines elektromagnetischen Feldes dar. Deshalb ist in einer vorteilhaften Ausführungsform vorgesehen, dass der Dokumentenkörper eine Antenne umfasst, welche derart ausgebildet ist, dass eine zum Betreiben der elektronischen Schaltung und der mindestens zwei individuell ansteuerbaren Leuchtmittel notwendige Energie mittels eines elektromagnetischen Feldes über die Antenne eingekoppelt und bereitgestellt werden kann. Ein entsprechend ausgebildeter Schaltkreis in der elektronischen Schaltung wandelt dann die in die Antenne eingekoppelte Energie in elektrische Energie um und stellt diese dem mindestens einen Sensor, der elektrischen Schaltung und den mindestens zwei individuell ansteuerbaren Leuchtmitteln zur Verfügung.

Eine optische Rückmeldung in Form eines Lichtmusters kann verschieden ausgebildet sein. In einer vorteilhaften Ausführungsform ist vorgesehen, dass es zwei unterschiedliche Arten von Signalmustern gibt, wobei ein statisches Signalmuster ein zeitlich nicht veränderliches Ansteuern der mindestens zwei individuell ansteuerbaren Leuchtmittel umfasst, so dass ein statisches Lichtmuster ausbildbar ist, und wobei ein dynamisches Signalmuster ein zeitlich veränderbares Ansteuern der mindestens zwei individuell ansteuerbaren Leuchtmittel umfasst, so dass ein dynamisches Lichtmuster ausbildbar ist. Ein statisches Signalmuster umfasst dann lediglich ein örtliches Ansteuern der mindestens zwei individuell ansteuerbaren Leuchtmittel, ein dynamisches Signalmuster umfasst hingegen sowohl ein örtliches als auch ein zeitliches Ansteuern der mindestens zwei individuell ansteuerbaren Leuchtmittel.

Ein statisches Lichtmuster ist dann ein für die Dauer des Anzeigens der optischen Rückmeldung zeitlich konstantes Lichtmuster, das lediglich eine örtliche Ausprägung über eine Verwendung von einzelnen oder Gruppen oder allen der mindestens zwei Leuchtmittel aufweist. Ein dynamisches Lichtmuster ist dagegen derart ausgebildet, sich während der Anzeigedauer der optischen Rückmeldung zu verändern. So sind beispielsweise Lauflichter, Sequenzen oder eine sukzessive Darstellung verschiedener Zeichen, Symbole oder Piktogramme möglich. Auch eine vorbestimmte Helligkeit eines Leuchtmittels kann Teil eines statischen oder eines dynamischen Lichtmusters.

Ferner ist in einer Ausführungsform vorgesehen, dass das Signalmuster jeweils mindestens einen Farbparameter der mindestens zwei individuell ansteuerbaren Leuchtmittel beschreibt, so dass das erzeugte Lichtmuster eine oder mehrere Farben aufweist. Bei einem statischen Lichtmuster bleibt der Farbparameter für die Dauer des Anzeigens konstant, bei einem dynamischen Lichtmuster kann hingegen ein Farbwechsel während der Dauer des Anzeigens vorgesehen sein.

Um beispielsweise nach einem Erfassen und Überprüfen einer Nutzerinteraktion ein positives Überprüfungsergebnis von einem negativem Überprüfungsergebnis zu unterscheiden, können von der elektronischen Schaltung verschiedene Signalmuster zur Erzeugung verschiedener Lichtmuster an den Leuchtmitteln bereitgestellt werden. Beispielsweise kann ein positives Ergebnis über eine Farbe, beispielsweise Grün, signalisiert werden. Ein negatives Ergebnis wird dann durch die Farbe Rot signalisiert. Die elektronische Schaltung erzeugt dann ein entsprechendes Signalmuster, welches die Leuchtmittel bzw. die Farbe der Leuchtmittel entsprechend ansteuert. Alternativ oder zusätzlich kann ein positives Überprüfungsergebnis auch durch Ausgabe einer bestimmten geometrischen Ausprägung oder Dynamik des Lichtmusters ausgedrückt werden. So kann beispielsweise bei einer Anordnung von mehreren Leuchtmitteln auf einer geschlossenen Kontur, beispielsweise eines Kreises, ein positives Überprüfungsergebnis durch eine im Uhrzeigersinn verlaufende Folge von an- und abgeschalteten Leuchtmitteln ausgegeben werden. Dabei wird jeweils immer nur ein Leuchtmittel zur gleichen Zeit angesteuert und das Weiterschalten auf das nächstfolgende Leuchtmittel erfolgt derart, dass bei einem menschlichen Betrachter ein Eindruck einer flüssigen Bewegung entsteht. So können die Schaltzeiten beispielsweise im Bereich von einigen Millisekunden bis zu einigen Hundert Millisekunden sein. Prinzipiell sind aber auch längere Schaltzeiten möglich. Soll ein negatives Überprüfungsergebnis signalisiert werden, so wird beispielsweise ein ähnliches Lichtmuster, jedoch mit einer Bewegungsrichtung entgegen dem Uhrzeigersinn, oder auch ein statisches Lichtmuster ausgegeben.

Eine Kombination einer farbigen optischen Rückmeldung mit einer dynamischen optischen Rückmeldung hat den Vorteil, dass auch bei einer vorliegenden Farbenblindheit des Benutzers das Überprüfungsergebnis bzw. die optische Rückmeldung eindeutig durch diesen interpretiert werden kann. Auch über eine entsprechende Positionierung der Leuchtmittel kann bei Farbenblindheit eine eindeutige optische Rückmeldung gegeben werden.

Auch während des Erfassens einer Nutzerinteraktion kann eine optische Rückmeldung ausgegeben werden. So kann beispielsweise während des Erfassens der Nutzerinteraktion an einem Sensor an den diesem Sensor zugeordneten Leuchtmitteln ein Lichtmuster ausgegeben werden, bei dem nur jedes zweite Leuchtmittel für eine bestimmte Dauer Licht emittiert. Nach der vorgegebenen Dauer werden dann die jeweils anderen, vorher nicht leuchtenden, Leuchtmittel derart angesteuert, dass sie Licht emittieren. So wird jeweils die Hälfte der Leuchtmittel abwechselnd betrieben. Ein Benutzer bekommt dadurch vermittelt, dass zu einem bestimmten Zeitpunkt ein Prozess durchlaufen wird, beispielsweise das Erfassen der Nutzerinteraktion, bis zu dessen Abschluss gewartet werden muss.

Auch eine Sequenz, bei der nacheinander einzelne oder mehrere der Leuchtmittel angesteuert werden, kann zum Ausdrücken einer zeitlichen Komponente, beispielsweise beim Erfassen oder Überprüfen einer Nutzerinteraktion, oder zum Darstellen einzelner Schritte eines Prozesses verwendet werden. So kann beispielsweise beim Erfassen einer Nutzerinteraktion in Form einer Zeichenkette einem Benutzer über ein Balkendiagramm signalisiert werden, an welcher Position der Zeichenkette die letzte getätigte bzw. die nächste getätigte Eingabe erfolgt. Hat ein PIN-Code beispielsweise vier Zeichen, so kann der Fortschritt beim Erfassen dieses PIN-Codes beispielsweise mittels vier nebeneinander angeordneten Leuchtmitteln (1, 2, 3, 4) dargestellt werden. Bei jedem der eingegebenen vier Zeichen, leuchtet dann beispielsweise ein weiteres Leuchtmittel zusätzlich (1, 1+2, 1+2+3, 1+2+3+4) oder alternativ nacheinander einzeln (1, 2, 3, 4) auf.

Ein Lichtmuster kann auch aus einer Folge von Zeichen, Symbolen, Piktogrammen oder Grafiken bestehen, welche über eine entsprechende Anordnung der Leuchtmittel auf dem Dokumentenkörper und/oder eine entsprechende Ansteuerung ausgebildet werden. Dies kann beispielsweise dadurch erfolgen, dass nur zur Darstellung der Zeichen, Symbole, Piktogramme oder Grafiken notwendige Bereiche mit einem oder mehreren Leuchtmitteln versehen werden. Alternativ können die Leuchtmittel auf Punkten eines regelmäßigen zweidimensionalen Gitters angeordnet werden, so dass nur die Leuchtmittel, welche zur Darstellung des Zeichens notwendig sind, im Rahmen des Lichtmusters angesteuert werden und leuchten.

Prinzipiell ist es auch möglich, unterschiedliche hier beschriebene Ausführungsformen miteinander zu kombinieren. Beispielsweise können auf dem Dokumentenkörper sowohl Leuchtmittel in Form eines Balkendiagramms als auch Leuchtmittel in Form einer geschlossenen Kontur angeordnet sein. Sind beispielsweise mehrere Sensoren zum Erfassen unterschiedlicher Nutzerinteraktionen vorhanden, so kann für jeden der Sensoren eine eigene optische Rückmeldung in Form eines entsprechenden Lichtmusters an nur dem entsprechenden Sensor zugeordneten individuell ansteuerbaren Leuchtmitteln vorgesehen sein.

Prinzipiell ist es auch möglich, dass mittels der Leuchtmittel Informationen an einen Benutzer übermittelt werden, welche vor einer ersten oder einer weiteren Nutzerinteraktion von dem Benutzer kognitiv verarbeitet werden müssen und dann in die sich anschließende Nutzerinteraktion mit einfließen. So kann die Nutzerinteraktion auch mehrere Schritte umfassen und beliebig komplex und interaktiv ausgebildet werden.

Ferner kann beispielsweise auch vorgesehen sein, dass einem Benutzer Hinweise zur Bedienung gegeben werden. Dabei können die Leuchtmittel auch von außen über ein, vorzugsweise kontaktloses, Lesegerät und ein zugehöriges übergeordnetes Sicherheitssystem gesteuert werden. Zum Beispiel kann vorgesehen sein, dass ein Nutzer für eine Zugangssteuerung eines geschützten Bereichs an einem Lesegerät einer Tür aufgefordert wird, seinen Finger auf den Sensor seines Sicherheitsdokuments zu legen oder zusätzlich einen PIN-Code einzugeben. Durch entsprechende Lichtmuster wird der Nutzer benutzerfreundlich hierzu aufgefordert. In diesem Fall entspricht ein Auflegen oder Einlegen des Wert- oder Sicherheitsdokuments auf, an oder in das Lesegerät einer ersten Nutzerinteraktion, das Auflegen des Fingers auf den Sensor oder das Eingeben eines PIN-Codes dann weiterer Nutzerinteraktionen.

Somit sind prinzipiell verschiedene Rückkopplungsmöglichkeiten gegeben und auch eine Vorwärtskopplung (Feedforward) ist möglich, beispielsweise die schon beschriebene Aufforderung zum Auflegen eines Fingers auf einen Fingerabdrucksensor.

Verschieden ausgebildete Rückkopplungen über unterschiedliche Lichtmuster sind insbesondere für folgende Szenarien möglich:
- Identifizierung ist in Ordnung,
- Identifizierung ist in Ordnung, jedoch hat der Nutzer keinen Zugang,
- Identifizierung ist nicht in Ordnung,
- eine Identifizierung über einen Fingerabdruck ist dreimal fehlgeschlagen,
- Eingeben einzelner PIN-Ziffern,
- PIN-Code ist in Ordnung,
- PIN-Code ist nicht in Ordnung
- PIN-Code wurde dreimal falsch eingegeben,
- Sensor ist gesperrt oder kaputt etc.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform eines Wert- oder Sicherheitsdokumentes in Form eines ID-Dokumentes mit einem Fingerabdrucksensor und kreisförmig um den Fingerabdrucksensor positionierten Leuchtmitteln;
- Fig. 2: eine schematische Darstellung einer Ausführungsform eines Wert- oder Sicherheitsdokumentes in Form eines ID-Dokumentes mit einem Fingerabdrucksensor und in einem Balkendiagramm angeordneten Leuchtmitteln;
- Fig. 3: eine schematische Darstellung einer Ausführungsform eines Wert- oder Sicherheitsdokumentes in Form eines ID-Dokumentes mit einem Fingerabdrucksensor und um den Fingerabdrucksensor positionierten Leuchtmitteln sowie in einem Balkendiagramm angeordneten Leuchtmitteln;
- Fig. 4: eine schematische Darstellung einer Ausführungsform eines Wert- oder Sicherheitsdokumentes in Form eines ID-Dokumentes mit einem Fingerabdrucksensor und auf einem regelmäßigen zweidimensionalen Gitter angeordneten Leuchtmitteln;
- Fig. 5: eine schematische Darstellung einer Anordnung eines Sensors und Leuchtmitteln auf einem Wert- oder Sicherheitsdokument;
- Fig. 6a: eine schematische Darstellung eines Lichtmusters zum Ausgeben einer optischen Rückmeldung mit einer Anordnung der Leuchtmittel nach Fig. 5;
- Fig. 6b: eine schematische Darstellung eines weiteren Lichtmusters zum Ausgeben einer optischen Rückmeldung mit einer Anordnung der Leuchtmittel nach Fig. 5;
- Fig. 6c: eine schematische Darstellung eines weiteren Lichtmusters zum Ausgeben einer optischen Rückmeldung mit einer Anordnung der Leuchtmittel nach Fig. 5;
- Fig. 6d: eine schematische Darstellung eines weiteren Lichtmusters zum Ausgeben einer optischen Rückmeldung mit einer Anordnung der Leuchtmittel nach Fig. 5;
- Fig. 6e: eine schematische Darstellung eines weiteren Lichtmusters zum Ausgeben einer optischen Rückmeldung mit einer Anordnung der Leuchtmittel nach Fig. 5;
- Fig. 6f: eine schematische Darstellung eines weiteren Lichtmusters zum Ausgeben einer optischen Rückmeldung mit einer Anordnung der Leuchtmittel nach Fig. 5;
- Fig. 6g: eine schematische Darstellung eines weiteren Lichtmusters zum Ausgeben einer optischen Rückmeldung mit einer Anordnung der Leuchtmittel nach Fig. 5;
- Fig. 6h: eine schematische Darstellung eines weiteren Lichtmusters zum Ausgeben einer optischen Rückmeldung mit einer Anordnung der Leuchtmittel nach Fig. 5;
- Fig. 6i: eine schematische Darstellung eines weiteren Lichtmusters zum Ausgeben einer optischen Rückmeldung mit einer Anordnung der Leuchtmittel nach Fig. 5;
- Fig. 6j: eine schematische Darstellung eines weiteren Lichtmusters zum Ausgeben einer optischen Rückmeldung mit einer Anordnung der Leuchtmittel nach Fig. 5;
- Fig. 7: ein schematisches Ablaufdiagramm des Verfahrens zum Ausgeben einer optischen Rückmeldung an einem Wert- oder Sicherheitsdokument.

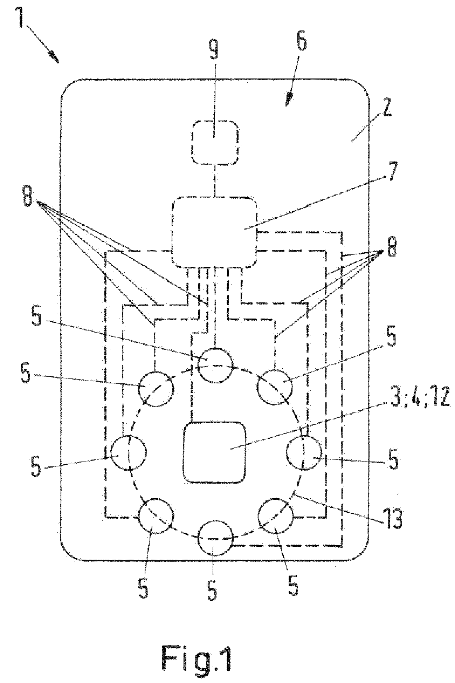

In Fig. 1 ist eine schematische Darstellung einer Ausführungsform eines Wert- oder Sicherheitsdokumentes 1 in Form eines ID-Dokumentes gezeigt. Das Wert- oder Sicherheitsdokument 1 umfasst einen Dokumentenkörper 2. Auf oder an einer Oberseite 6 des Dokumentenkörpers 2 weist der Dokumentenkörper 2 einen Sensor 3 zum Erfassen einer Nutzerinteraktion auf. Der Sensor 3 ist in diesem Beispiel ein biometrischer Sensor 12, insbesondere ein Fingerabdrucksensor 4. Um den Fingerabdrucksensor 4 herum sind auf einer geschlossenen Kontur in Form eines Kreises 13 in gleichmäßigen Abständen acht Leuchtmittel 5 zum Ausgeben einer optischen Rückmeldung angeordnet. Prinzipiell können aber auch andere Abstände und/oder Anordnungen der Leuchtmittel 5 gewählt werden. Der Dokumentenkörper 2 weist ferner eine innenliegende von außen nicht sichtbare elektronische Schaltung 7 auf, welche jeweils mit dem beispielsweise als Fingerabdrucksensor 4 ausgebildeten Sensor 3 und den Leuchtmitteln 5 über entsprechende Steuer- und Datenleitungen 8 elektrisch verbunden ist. Zusätzlich kann der Dokumentenkörper 2 eine Antenne 9 aufweisen, welche dazu dient, elektromagnetische Feldenergie in elektrische Energie umzuwandeln und zum Betrieb der elektronischen Schaltung 7, des Sensors 3 und der Leuchtmittel 5 bereitzustellen und eine Datenkommunikation mit externen Einrichtungen zu ermöglichen.

Die Leuchtmittel 5 können an oder in der Oberseite 6 des Dokumentkörpers 2 ausgebildet sein. Vorzugsweise sind diese im Innern des Dokumentkörpers2 integriert. So sind diese gegen Beschädigungen und Manipulationen gut geschützt. In jedem Fall sind diese so angeordnet, dass das emittierte Licht durch die Oberseite 6 oder auf oder an der Oberseite 6 erfassbar ist. Die Integration erfolgt vorzugsweise so, dass weder an der Oberseite 6 noch an einer gegenüberliegenden Unterseite eine Veränderung der Oberfläche zu ertasten ist oder ohne den Betrieb des jeweiligen Leuchtmittels erkannt werden kann.

Besonders bevorzugt sind die Leuchtmittel durch ein Überdrucken, beispielsweise mit einer transluzenten oder transparenten Farbe, verborgen. Zwischen der Oberseite 6 und den Leuchtmitteln 5 kann auch eine transluzente oder farbig eingefärbte transparente Schicht im Innern des Dokumentkörpers ausgebildet sein, um die Leuchtmittel zu verbergen, wenn diese nicht in Betrieb sind. Aufgrund der Möglichkeit des Überdruckens wird eine optische Gestaltung einer wahrnehmbaren inneren Schicht durch die Integration der Leuchtmittel nicht beeinträchtigt.

Erfindungsgemäß sind die Leuchtmittel in einen Dokumentenkörper integriert, so dass das emittierte Licht von beiden Seiten des Dokumentes erfassbar ist. Dies hat den Vorteil, dass der Nutzer bei Benutzung des Daumens oder bei Benutzung des Zeigefingers auf dem Sensor die Lichtmuster sowohl auf der Oberseite des Dokumentenkörpers als auch auf der Unterseite des Dokumentenkörpers gut erkennen kann. Eine Erfassung des Zeigefingerabdruckes ist beispielsweise ergonomisch einfach möglich, wenn der Sensor und somit die Oberseite des Sicherheitsdokuments von dem Sichtfeld des Nutzers abgewandt ist und dieser die Unterseite des Sicherheitsdokuments während der Erfassung betrachtet.

Soll nun beispielsweise eine Identifikation des Inhabers des Wert- oder Sicherheitsdokumentes 1 vorgenommen werden, so wird elektrische Energie durch externes Bereitstellen eines elektromagnetischen Feldes über die Antenne 9 eingekoppelt. Der Inhaber legt dann einen dafür vorgesehenen Finger auf den Fingerabdrucksensor 4. Der Fingerabdrucksensor 4 erfasst den Fingerabdruck als Nutzerinteraktion und leitet entsprechende Messdaten über die Steuer- und Datenleitung 8 an die elektronische Schaltung 7 weiter. Diese wertet die erfassten Messdaten des Fingerabdruckes aus und vergleicht diese mit in der elektronischen Schaltung 7 hinterlegten Daten. Auf Grundlage des Vergleichsergebnisses entscheidet die elektronische Schaltung 7, ob ein positives oder ein negatives Überprüfungsergebnis vorliegt. Je nachdem, ob ein positives oder ein negatives Überprüfungsergebnis vorliegt, erzeugt die elektronische Schaltung 7 ein unterschiedliches Signalmuster. Das erzeugte Signalmuster wird über die Steuer- und Datenleitungen 8 an die einzelnen Leuchtmittel 5 ausgegeben, welche entsprechend des Signalmusters individuell angesteuert ein Lichtmuster erzeugen. Das erzeugte Lichtmuster ist dann für den Inhaber des Wert- oder Sicherheitsdokuments, einem anderen Benutzer bzw. Betrachter oder einer maschinellen Einrichtung erfassbar. Da das Lichtmuster für ein positives Überprüfungsergebnis anders ausgebildet ist als für ein negatives Prüfungsergebnis, kann durch diese Form der optischen Rückmeldung direkt und unmittelbar auf das Überprüfungsergebnis geschlossen werden. Somit erhält der Inhaber, ein anderer Betrachter oder eine maschinelle Einrichtung auf einfachem Wege das Ergebnis der Identitätsüberprüfung des Inhabers des Wert- oder Sicherheitsdokumentes mitgeteilt.

Zusätzlich kann über die Antenne 9 das Überprüfungsergebnis kontaktlos an ein verwendetes Lesegerät und ein zugehöriges übergeordnetes Sicherheitssystem, beispielsweise eine Zugangsberechtigungssteuerung eines Sicherheitsbereiches, übertragen werden und daraufhin, beispielsweise, die Tür zu dem Sicherheitsbereich automatisch geöffnet werden.

Insbesondere kann auch vorgesehen sein, dass hinterlegte Daten mittels kryptographischer Verfahren verschlüsselt werden oder nur in verschlüsselter Form bearbeitet und/oder übertragen werden. Auch ein Verschlüsseln und Entschlüsseln der hinterlegten oder erfassten Daten kann vorgesehen sein.

Die Leuchtmuster für die positive oder negative optische Rückmeldung sind verschieden ausgebildet, beispielsweise als unterschiedliche dynamische Sequenzen und/oder unterschiedliche Farbe zur Kennzeichnung eines positiven und negativen Überprüfungsergebnisses.

Prinzipiell ist es auch möglich, während des Erfassens des Fingerabdruckes einen fortschreitenden Prozess zu signalisieren. Dazu kann beispielsweise ein Lauflicht durch sequentielles Ansteuern der Leuchtmittel erfolgen, beispielsweise im 250-Millisekunden-Takt, wobei das Lauflicht im Uhrzeigersinn auf dem Kreis 6 um den Fingerabdrucksensor 4 herumläuft. Ist der Fingerabdruck dann erfolgreich erfasst worden, hört das Lauflicht auf und es wird beispielsweise eine andere optische Rückmeldung gegeben. Ein solches Lauflicht zeigt einem Nutzer an, dass gerade ein Prozess durchlaufen wird, das Erfassen des Fingerabdrucks aber gerade fehlerfrei durchgeführt wird. Der Nutzer erhält somit eine verbesserte Rückmeldung darüber, dass sein Fingerabdruck gerade erfasst wird und er sich gedulden muss, beispielsweise indem der Finger weiter still auf dem Fingerabdrucksensor belassen wird.

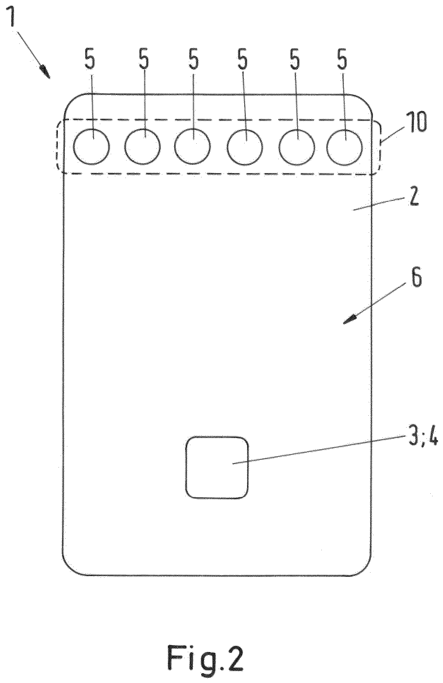

In Fig. 2 ist eine weitere schematische Darstellung einer weiteren Ausführungsform eines Wert- oder Sicherheitsdokumentes 1 in Form eines ID-Dokumentes dargestellt. Das Wert- oder Sicherheitsdokument 1 umfasst einen Dokumentenkörper 2. Auf oder an einer Oberseite 6 des Dokumentenkörpers 2 weist der Dokumentenkörper 2 einen Sensor 3 zum Erfassen einer Nutzerinteraktion auf. Der Sensor 3 ist in diesem Beispiel wiederum ein Fingerabdrucksensor 4. Im Gegensatz zu der in Fig. 1 dargestellten Ausführungsform sind die Leuchtmittel 5 hier in Form eines Balkendiagramms 10 an einem Ende des Dokumentenkörpers 2 angeordnet. Die sonstige Ausführungsform und Funktionsweise ist identisch mit der Ausführungsform in Fig. 1. Die Antenne, die elektronische Schaltung und die Steuer- und Datenleitungen sind in Fig. 2 nicht gezeigt.

Die Lichtmuster zum Ausgeben der optischen Rückmeldungen für ein positives bzw. ein negatives Überprüfungsergebnis der erfassten Nutzerinteraktion (Fingerabdruck) sind beispielsweise statisch oder dynamisch als farbige Kennzeichnung in Form eines Balkens auf dem Balkendiagramm 10 und/oder eines Lauflichts oder binären Musters ausgebildet.

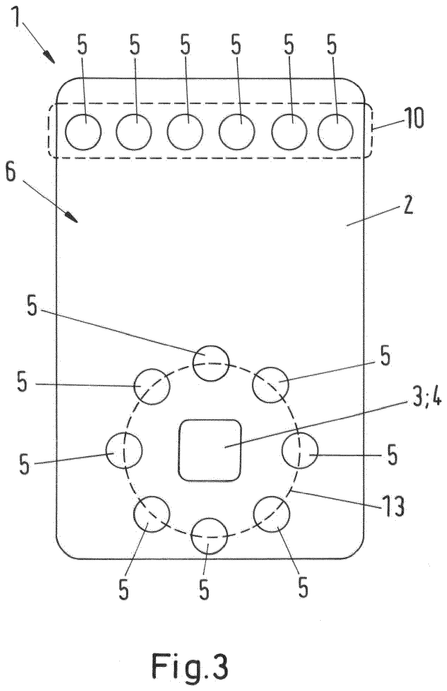

In Fig. 3 ist eine schematische Darstellung einer Ausführungsform eines Wert- oder Sicherheitsdokumentes 1 in Form eines ID-Dokumentes mit einem Fingerabdrucksensor 4 und um den Fingerabdrucksensor 4 positionierten Leuchtmitteln 5 sowie in einem Balkendiagramm 10 angeordneten Leuchtmitteln 5 gezeigt. Diese Ausführungsform stellt eine Kombination der beiden vorherigen in den Figuren 1 und 2 gezeigten Ausführungsformen dar. Die Lichtmuster können in dieser Ausführungsform komplexer ausgebildet sein, beispielsweise indem während des Erfassens des Fingerabdruckes ein Lauflicht um den Fingerabdrucksensor 4 herumläuft, das Prüfungsergebnis aber im Balkendiagramm 10 dargestellt wird.

Prinzipiell ist es auch möglich, dass mittels der Leuchtmittel 5 Informationen an einen Benutzer übermittelt werden, welche vor einer ersten oder einer weiteren Nutzerinteraktion von dem Benutzer kognitiv verarbeitet werden müssen und dann in eine sich anschließende Nutzerinteraktion mit einfließen. So kann die Nutzerinteraktion auch mehrere Schritte umfassen und beliebig komplex und interaktiv ausgebildet werden. Ferner kann beispielsweise auch vorgesehen sein, dass einem Benutzer Hinweise zur Bedienung gegeben werden. Dabei können die Leuchtmittel 5 auch von außen über ein kontaktloses Lesegerät und ein zugehöriges übergeordnetes Sicherheitssystem gesteuert werden. Zum Beispiel kann vorgesehen sein, dass ein Nutzer für eine Zugangssteuerung an dem Lesegerät einer Tür aufgefordert wird, seinen Finger auf den Fingerabdrucksensor 4 zu legen oder zusätzlich einen PIN-Code einzugeben. Durch entsprechende Lichtmuster wird der Nutzer benutzerfreundlich hierzu aufgefordert. In diesem Fall entsprechen ein Auflegen, Anlegen oder Einlegen des Wert- oder Sicherheitsdokuments 1 auf, an oder in das Lesegerät einer ersten Nutzerinteraktion, das Auflegen des Fingers auf den Fingerabdrucksensor 4 oder das Eingeben eines PIN-Codes dann entsprechend weiteren Nutzerinteraktionen.

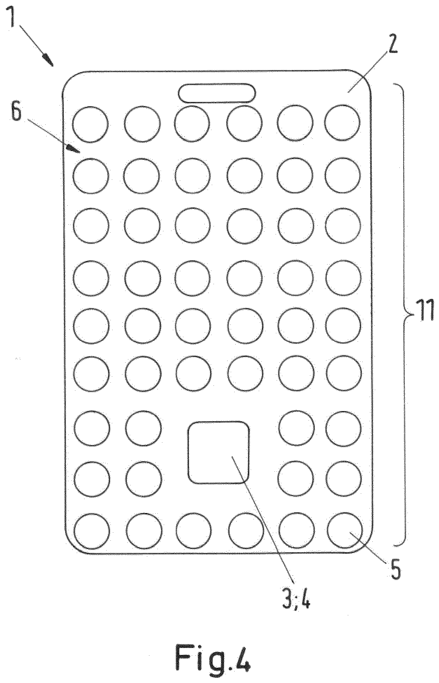

Fig. 4 zeigt eine schematische Darstellung einer weiteren Ausführungsform eines Wert- oder Sicherheitsdokumentes 1 in Form eines ID-Dokumentes mit einem Fingerabdrucksensor 4 und auf einem regelmäßigen zweidimensionalen Gitter 11 angeordneten Leuchtmitteln 5 (der Übersichtlichkeit halber ist nur eines der Leuchtmittel mit einem Bezugszeichen versehen). Der Fingerabdrucksensor 4 befindet sich dabei innerhalb des regelmäßigen zweidimensionalen Gitters 11. Die Verwendung dieser Ausführungsform des Wert- oder Sicherheitsdokumentes 1 ist analog zu den Ausführungsformen, welche in den Figuren 1, 2 und 3 beschrieben wurden.

Mittels der auf diese Weise angeordneten Leuchtmittel können komplexe Lichtmuster erzeugt werden, beispielsweise Symbole, Zeichen, Piktogramme oder sonstige monochrome oder farbige Grafiken. Es können auch dynamische Lichtmuster erzeugt werden, welche beispielsweise einen Text über die Leuchtmittel 5 darstellen und über die einzelnen Gitterpunkte des regelmäßigen zweidimensionalen Gitters 11 hinweg laufen lassen. Auf diese Weise lassen sich auch längere Zeichenfolgen und bewegte Grafiken darstellen und als optische Rückmeldung verwenden.

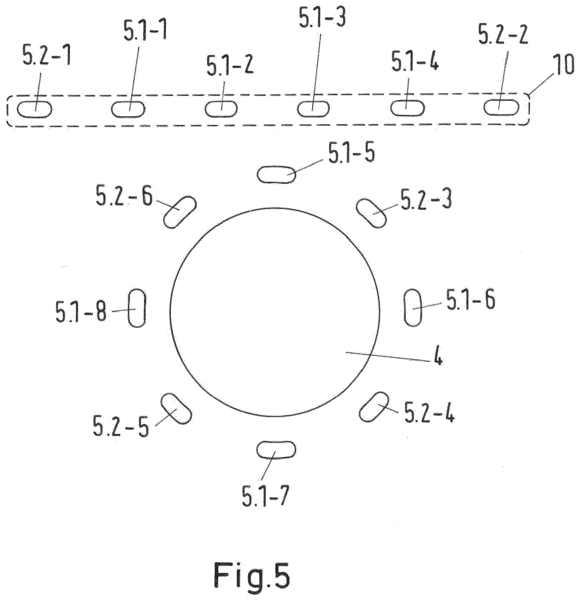

Fig. 5 zeigt ein schematisches Ausführungsbeispiel für eine Anordnung der Leuchtmittel 5.1-x, 5.2-x zum Ausgeben verschiedener Lichtmuster. Um einen Fingerabdrucksensor 4 herum sind kreisförmig abwechselnd grüne Leuchtmittel 5.1-5, 5.1-6, 5.1-7, 5.1-8 und rote Leuchtmittel 5.2-3, 5.2-4, 5.2-5, 5.2-6 angeordnet. Darüber befinden sich ebenfalls Leuchtmittel 5.1-1, 5.1-2, 5.1-3, 5.1-4, 5.2-1, 5.2-2 in Form eines Balkendiagramms 10, wobei die vier inneren Leuchtmittel 5.1-1, 5.1-2, 5.1-3, 5.1-4 grün und die zwei äußeren Leuchtmittel 5.2-1, 5.2-2 rot sind.

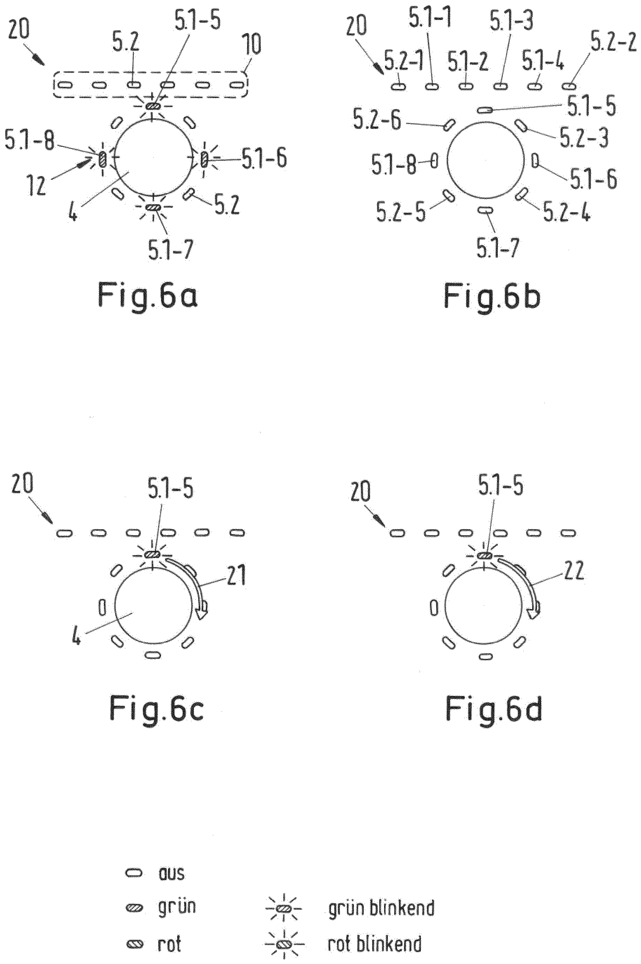

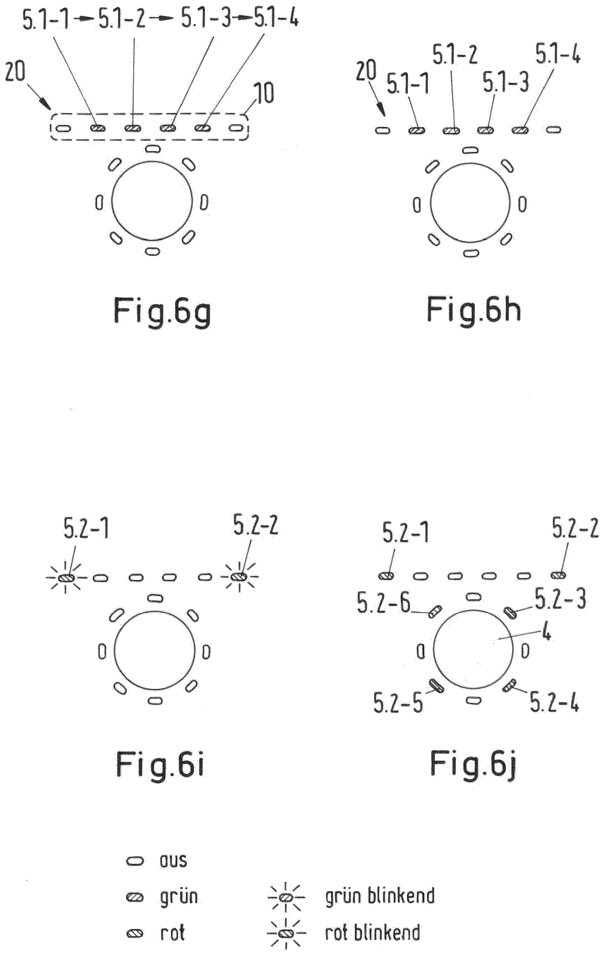

Die Figuren 6a bis 6j zeigen Ausführungsbeispiele der Lichtmuster 20 vor, während und nach dem Erfassen einer Nutzerinteraktion. Die Farben der Leuchtmittel 5.1-x, 5.2-x sind dabei entsprechend der für die Fig. 5 gegebenen Beschreibung.

Die Nutzeraktion soll in den Figuren 6a bis 6f das Erfassen eines Fingerabdruckes an oder auf dem Fingerabdrucksensor 4 sein. Die Situation vor dem Erfassen des Fingerabdruckes ist in den Figuren 6a und 6b dargestellt. Ist das Wert- oder Sicherheitsdokument betriebsbereit, beispielsweise nachdem eine Energiequelle zum Betrieb des Sensors, der elektronischen Schaltung und der Leuchtmittel 5.1-x, 5.2-x zugeschaltet wurde, so wird ein Lichtmuster 20 ausgegeben, bei dem die grünen Leuchtmittel 5.1-5, 5.1-6, 5.1-7, 5.1-8 oberhalb, unterhalb, rechts und links von dem Fingerabdrucksensor 4 blinken. Die roten Leuchtmittel 5.2-3, 5.2-4, 5.2-5, 5.2-6 zwischen den blinkenden grünen Leuchtmitteln 5.1-5, 5.1-6, 5.1-7, 5.1-8 und die grünen und roten Leuchtmittel 5.1-1, 5.1-2, 5.1-3, 5.1-4, 5.2-1, 5.2-2 innerhalb des Balkendiagramms 10 werden hingegen nicht angesteuert und leuchten nicht. Die hier beschriebenen Lichtmuster sind lediglich beispielshafte Ausführungsformen. Prinzipiell können die Lichtmuster auch anders ausgebildet sein. Es kann insbesondere auch vorgesehen sein, dass ein Lichtmuster lediglich das Leuchten eines einzigen Leuchtmittels umfasst.

Ist das Wert- oder Sicherheitsdokument hingegen nicht betriebsbereit zum Erfassen des Fingerabdruckes als Nutzerinteraktion, so wird keines der Leuchtmittel 5.1-x, 5.2-x angesteuert und es gibt keine optische Rückmeldung. Diese Situation ist beispielhaft in der Fig. 6b dargestellt. Auf diese Weise wird ein Benutzer stets darüber informiert, ob das Wert- oder Sicherheitsdokument betriebsbereit ist oder nicht.

Ist das Wert- oder Sicherheitsdokument betriebsbereit zum Erfassen des Fingerabdruckes und legt der Benutzer seinen Finger auf den Fingerabdrucksensor 4, so wird mit dem Erfassen des Fingerabdruckes durch den Fingerabdrucksensor 4 begonnen. Während des Erfassens wird am Anfang des Vorganges ein dynamisches Lichtmuster 20 als optische Rückmeldung ausgegeben, bei dem jeweils ein einzelnes um den Fingerabdrucksensor 4 angeordnetes grünes Leuchtmittel 5.1-5, 5.1-6, 5.1-7, 5.1-8 sukzessive im Uhrzeigersinn angesteuert wird, so dass der Eindruck einer umlaufenden Bewegung entsteht (Fig. 6c). Dabei wird eine konstante Umlaufgeschwindigkeit 21 verwendet.

Die Situation am Ende des Vorganges ist beispielhaft in Fig. 6d dargestellt. Um das bevorstehende Ende des Vorganges im Rahmen einer optischen Rückmeldung zu signalisieren, wird die Geschwindigkeit, mit dem die grünen Leuchtmittel 5.1-5, 5.1-6, 5.1-7, 5.1-8 umlaufend angesteuert werden, erhöht, so dass von dem Benutzer eine ansteigende Geschwindigkeit 22 erfasst wird.

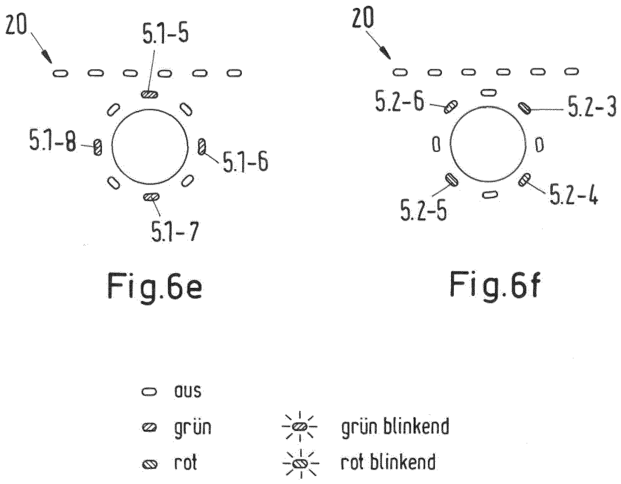

Ist der Fingerabdruck des Benutzers erfasst, so überprüft die elektronische Schaltung den erfassten Fingerabdruck. Liegt ein positives Überprüfungsergebnis vor, so werden gleichzeitig die grünen Leuchtmittel 5.1-5, 5.1-6, 5.1-7, 5.1-8 oberhalb, unterhalb und rechts und links des Fingerabdrucksensors 4 angesteuert, so dass diese konstant leuchten (Fig. 6e).

Liegt hingegen ein negatives Überprüfungsergebnis vor, so werden gleichzeitig die roten Leuchtmittel 5.2 um den Fingerabdrucksensor 4 herum so angesteuert, dass diese blinken (Fig. 6f).

In den Figuren 6g bis 6j sind Lichtmuster 20 während und nach dem Erfassen einer PIN-Eingabe als Nutzerinteraktion gezeigt. Der einzugebende PIN-Code soll beispielsweise eine vierstellige Zeichenfolge sein, welche an einer Tastatur (nicht dargestellt) auf dem Wert- oder Sicherheitsdokument zu erfassen ist. Dabei werden die Lichtmuster 20 nur an den Leuchtmitteln 5.1-1, 5.1-2, 5.1-3, 5.1-4, 5.2-1, 5.2-2 des Balkendiagramms 10 ausgebildet.

Für jedes Zeichen des PIN-Codes ist jeweils ein Ansteuern eines der grünen Leuchtmittel 5.1-1, 5.1-2, 5.1-3, 5.1-4 vorgesehen. Wird ein Zeichen eingegeben, so wird das Lichtmuster 20 verändert, indem ein weiteres der grünen Leuchtmittel 5.1-1, 5.1-2, 5.1-3, 5.1-4 angesteuert wird. Somit erleuchten parallel zur Eingabe des PIN-Code sukzessive die vier grünen Leuchtmittel 5.1-1, 5.1-2, 5.1-3, 5.1-4 (angedeutet durch die Zeichenfolge "5.1-1 → 5.1-2→ 5.1-3→5.1-4" in Fig. 6g), so dass am Ende alle grünen Leuchtmittel 5.1-1, 5.1-2, 5.1-3, 5.1-4 im Balkendiagramm 10 leuchten.

Der eingegeben PIN-Code wird anschließend von der elektronischen Schaltung überprüft. Ist das Überprüfungsergebnis positiv, so leuchten die vier grünen Leuchtmittel 5.1-1, 5.1-2, 5.1-3, 5.1-4 gleichzeitig und konstant auf (Fig. 6h).

Konnte der PIN-Code nicht ordnungsgemäß erfasst werden, so wird ein Lichtmuster 20 ausgeben, bei dem die äußeren beiden roten Leuchtmittel 5.2-1, 5.2-2 blinken (Fig. 6i). Wurde der PIN-Code hingegen ordnungsgemäß erfasst, das Überprüfungsergebnis ist aber negativ, so wird ein Lichtmuster 20 ausgeben, bei dem die äußeren zwei roten Leuchtmittel 5.2-1, 5.2-2 und alle roten Leuchtmittel 5.2-3, 5.2-4, 5.2-5, 5.2-6 um den Fingerabdrucksensor 4 herum konstant leuchten.

Die beschriebenen Ausführungsformen der Lichtmuster 20 stellen lediglich Beispiele zur Verdeutlichung der Erfindung dar und können prinzipiell auch anders ausgebildet sein.

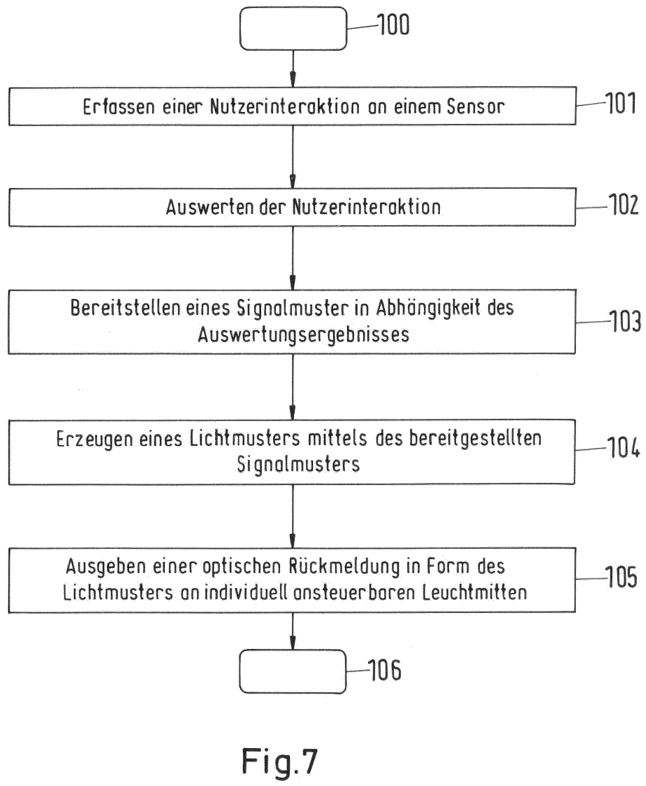

Fig. 7 zeigt ein schematisches Ablaufdiagramm des Verfahrens zum Ausgeben einer optischen Rückmeldung an einem Wert- oder Sicherheitsdokument. Nach dem Beginn 100 des Verfahrens wird in einem ersten Verfahrensschritt 101 eine Nutzerinteraktion erfasst, beispielsweise durch Erfassen eines Fingerabdruckes an einem Fingerabdrucksensor. Die erfasste Nutzerinteraktion wird dann von einer elektronischen Schaltung im Dokumentenkörper des Wert- oder Sicherheitsdokuments ausgewertet 102. Abhängig von dem Ergebnis der Auswertung stellt die elektronische Schaltung ein Signalmuster bereit 103, welches zum Beispiel ein Lichtmuster beschreibt, welches in Abhängigkeit eines positiven oder negativen Überprüfungsergebnisses der erfassten Nutzerinteraktion ausgebildet wird. Anschließend wird das Lichtmuster mittels des bereitgestellten Signalmusters erzeugt 104 und als optische Rückmeldung an individuell ansteuerbaren Leuchtmitteln ausgegeben 105. Nach Ausgeben der optischen Rückmeldung ist das Verfahren beendet 106. Es kann dann beliebig wiederholt werden und beginnt dann mit dem Verfahrensschritt 101 von vorne.

### Bezugszeichenliste

- 1: Wert- oder Sicherheitsdokument
- 2: Dokumentenkörper
- 3: Sensor
- 4: Fingerabdrucksensor
- 5: Leuchtmittel
- 5.1-x: grünes Leuchtmittel
- 5.2-x: rotes Leuchtmittel
- 6: Oberseite
- 7: elektronische Schaltung
- 8: Steuer- und Datenleitung
- 9: Antenne
- 10: Balkendiagramm
- 11: regelmäßiges zweidimensionales Gitter
- 12: biometrischer Sensor
- 13: Kreis
- 20: Lichtmuster
- 21: konstante Umlaufgeschwindigkeit
- 22: ansteigende Umlaufgeschwindigkeit
- 100-106: Verfahrensschritte

## Patentansprüche

1. Wert- oder Sicherheitsdokument (1), umfassend:
einen Dokumentenkörper (2) mit einer Oberseite (6) und einer der Oberseite (6) gegenüberliegenden Unterseite,
einer elektronischen Schaltung (7) und
mindestens einem Sensor (3) zum Erfassen mindestens einer Nutzerinteraktion,
**dadurch gekennzeichnet, dass**
der Dokumentenkörper (2) mindestens zwei über die Oberseite (6) und die Unterseite visuell erfassbare mit der elektronischen Schaltung (7) verbundene und durch diese individuell ansteuerbare Leuchtmittel (5, 5.1-x, 5.2-x) zum Erzeugen eines Lichtmusters (20) aufweist, und
wobei die elektronische Schaltung (7) derart ausgebildet ist, die mindestens eine Nutzerinteraktion auszuwerten, basierend auf der ausgewerteten Nutzerinteraktion ein Signalmuster bereitzustellen und auf Grundlage des Signalmusters das Lichtmuster (20) an den mindestens zwei individuell ansteuerbaren Leuchtmitteln (5, 5.1-x, 5.2-x) auszugeben.

2. Wert- oder Sicherheitsdokument (1) nach Anspruch 1, **dadurch gekennzeichnet, dass** der Dokumentenkörper (2) an der Oberseite (6) und der Unterseite mindestens ein weiteres individuell ansteuerbares Leuchtmittel aufweist, wobei das mindestens eine weitere Leuchtmittel mit mindestens einem der mindestens zwei individuell ansteuerbaren Leuchtmittel (5, 5.1-x, 5.2-x) gekoppelt ist, so dass diese zeitgleich angesteuert werden können.

3. Wert- oder Sicherheitsdokument (1) nach einem der vorangegangenen Ansprüche, **dadurch gekennzeichnet, dass** zumindest ein Teil der mindestens zwei individuell ansteuerbaren Leuchtmittel (5, 5.1-x, 5.2-x) ein im Vergleich zu einem anderen Teil der mindestens zwei individuell ansteuerbaren Leuchtmittel (5, 5.1-x, 5.2-x) unterschiedliches Spektrum emittiert.

4. Wert- oder Sicherheitsdokument (1) nach einem der vorangegangenen Ansprüche, **dadurch gekennzeichnet, dass** die mindestens zwei individuell ansteuerbaren Leuchtmittel (5, 5.1-x, 5.2-x) jeweils als LED oder OLED ausgebildet sind.

5. Wert- oder Sicherheitsdokument (1) nach Anspruch 3 oder 4, **dadurch gekennzeichnet, dass** mindestens eines der mindestens zwei individuell ansteuerbaren Leuchtmittel (5, 5.1-x, 5.2-x) derart ausgebildet ist, das von diesem Leuchtmittel emittierte Spektrum bei entsprechender Ansteuerung durch die elektronische Schaltung (7) änderbar ist.

6. Wert- oder Sicherheitsdokument (1) nach einem der vorangegangenen Ansprüche, **dadurch gekennzeichnet, dass** der mindestens eine Sensor (3) ein biometrischer Sensor (12) zum Erfassen einer biometrischen Information ist, und wobei die Nutzerinteraktion ein Erfassen einer biometrischen Information umfasst.

7. Wert- oder Sicherheitsdokument (1) nach Anspruch 6, **dadurch gekennzeichnet, dass** der biometrische Sensor (12) ein Fingerabdrucksensor (4) zum Erfassen eines Fingerabdrucks ist, wobei die Nutzerinteraktion ein Erfassen eines Fingerabdruckes umfasst.

8. Wert- oder Sicherheitsdokument (1) nach einem der vorangegangenen Ansprüche, **dadurch gekennzeichnet, dass** der mindestens eine Sensor (3) mindestens ein haptisch betätigbares Schaltelement umfasst.

9. Wert- oder Sicherheitsdokument (1) nach Anspruch 8, **dadurch gekennzeichnet, dass** das mindestens eine haptisch betätigbare Schaltelement als Tastatur zum Erfassen einer Zeichenfolge ausgebildet ist, wobei die Nutzerinteraktion ein Erfassen einer Zeichenfolge umfasst.

10. Wert- oder Sicherheitsdokument (1) nach einem der vorangegangenen Ansprüche, **dadurch gekennzeichnet, dass** zumindest ein Teil der mindestens zwei individuell ansteuerbaren Leuchtmittel (5, 5.1-x, 5.2-x) gleichmäßig verteilt entlang einer geschlossenen Kontur angeordnet ist.

11. Wert- oder Sicherheitsdokument (1) nach Anspruch 10, **dadurch gekennzeichnet, dass** die geschlossene Kontur den mindestens einen Sensor (3) umlaufend umschließt.

12. Wert- oder Sicherheitsdokument (1) nach einem der vorangegangenen Ansprüche, **dadurch gekennzeichnet, dass** zumindest ein Teil der mindestens zwei individuell ansteuerbaren Leuchtmittel (5, 5.1-x, 5.2-x) auf Gitterpunkten eines regelmäßigen zweidimensionalen Gitters (11) angeordnet ist.

13. Wert- oder Sicherheitsdokument (1) nach einem der vorangegangenen Ansprüche, **dadurch gekennzeichnet, dass** der Dokumentenkörper (2) eine Antenne (9) umfasst, welche derart ausgebildet ist, dass eine zum Betreiben der elektronischen Schaltung (7) und der mindestens zwei individuell ansteuerbaren Leuchtmittel (5, 5.1-x, 5.2-x) notwendige Energie mittels eines elektromagnetischen Feldes über die Antenne (9) eingekoppelt und bereitgestellt werden kann.

14. Verfahren zum Ausgeben einer optischen Rückmeldung an einem Wert- oder Sicherheitsdokument (1), umfassend die Schritte:
Erfassen mindestens einer Nutzerinteraktion durch mindestens einen Sensor (3) auf oder an einem Dokumentenkörper (2) des Wert- oder Sicherheitsdokumentes (1),
Auswerten der mindestens einen Nutzerinteraktion durch eine elektronische Schaltung (7) des Dokumentenkörpers (2),
Bereitstellen eines Signalmusters zum Erzeugen eines Lichtmusters (20) für mindestens zwei über eine Oberseite (6) und eine Unterseite des Dokumentenkörpers (2) visuell erfassbare individuell ansteuerbare Leuchtmittel (5, 5.1-x, 5.2-x) durch die elektronische Schaltung (7), wobei das Signalmuster auf Grundlage der ausgewerteten Nutzerinteraktion bereitgestellt wird,
Ausgeben einer optischen Rückmeldung in Form des Lichtmusters (20) durch individuelles Ansteuern der mindestens zwei individuell ansteuerbaren Leuchtmittel (5, 5.1-x, 5.2-x) gemäß des bereitgestellten Signalmusters durch die elektronische Schaltung (7).

15. Verfahren nach Anspruch 14, **dadurch gekennzeichnet, dass** es zwei unterschiedliche Arten von Signalmustern gibt, wobei ein statisches Signalmuster ein zeitlich nicht veränderliches Ansteuern der mindestens zwei individuell ansteuerbaren Leuchtmittel umfasst, so dass ein statisches Lichtmuster ausgebildet wird, und wobei ein dynamisches Signalmuster ein zeitlich veränderbares Ansteuern der mindestens zwei individuell ansteuerbaren Leuchtmittel (5, 5.1-x, 5.2-x) umfasst, so dass ein dynamisches Lichtmuster ausgebildet wird, wobei abhängig von einem Ergebnis der Auswertung der Nutzerinteraktion ein dynamisches Lichtmuster oder ein statisches Lichtmuster erzeugt wird.

16. Verfahren nach einem der Ansprüche 14 oder 15, **dadurch gekennzeichnet, dass** das Signalmuster jeweils so ausgebildet wird, dass mittels mindestens einer der mindestens zwei individuell ansteuerbaren Leuchtmittel (5, 5.1-x, 5.2-x) farbiges Licht erzeugt wird, so dass das Lichtmuster (20) eine oder mehrere Farben aufweist.

17. Verfahren nach einem der Ansprüche 14 bis 16, **dadurch gekennzeichnet, dass** eine zum Betreiben der elektronischen Schaltung (7) und der mindestens zwei individuell ansteuerbaren Leuchtmittel (5, 5.1-x, 5.2-x) notwendige Energie mittels eines elektromagnetischen Feldes über eine entsprechende Antenne (9) des Wert- oder Sicherheitsdokuments (1) eingekoppelt und bereitgestellt wird.

## Claims

1. Valuable document or security document (1), comprising:
a document body (2) with an upper side (6) and an under side located opposite the upper side (6),
an electronic circuit (7), and
at least one sensor (3) for detecting at least one user interaction,
**characterised in that**
the document body (2) comprises at least two lighting means (5, 5.1-x, 5.2-x) visually detectable via the upper side (6) and the under side, connected to the electronic circuit (7) and individually actuatable by the circuit, for producing a light pattern (20), and
wherein the electronic circuit (7) is configured in such a way as to evaluate the at least one user interaction, to provide a signal pattern based on the user interaction which has been evaluated, and, on the basis of the signal pattern, to issue the light pattern (20) to the at least two individually controllable light means (5, 5.1-x, 5.2-x),

2. Valuable document or security document (1) according to claim 1, **characterised in that** the document body (2) comprises at the upper side (6) and at the under side at least one further individually actuatable lighting means, wherein the at least one further lighting means is coupled to at least one of the at least two individually actuatable lighting means (5, 5.1-x, 5.2-x), such that these can be actuated simultaneously.

3. Valuable document or security document (1) according to any one of the preceding claims, **characterised in that** at least a part of the at least two individually actuatable lighting means (5, 5.1-x, 5.2-x) emits a spectrum which is different in comparison with another part of the at least two individually actuatable lighting means (5, 5.1-x, 5.2-x).

4. Valuable document or security document (1) according to any one of the preceding claims, **characterised in that** the at least two individually actuatable lighting means (5, 5.1-x, 5.2-x) are configured in each case as LED's or OLED's.

5. Valuable document or security document (1) according to claim 3 or 4, **characterised in that** at least one of the at least two individually actuatable lighting means (5, 5.1-x, 5.2-x) is configured in such a way that the spectrum emitted by this lighting means can be changed by corresponding actuation by the electronic circuit (7).

6. Valuable document or security document (1) according to any one of the preceding claims, **characterised in that** the at least one sensor (3) is a biometric sensor (12) for detecting an item of biometric information, and wherein the user interaction comprises the detection of an item of biometric information.

7. Valuable document or security document (1) according to claim 6, **characterised in that** the biometric sensor (12) is a fingerprint sensor (4) for detecting a fingerprint, wherein the user interaction comprises a detection of a fingerprint.

8. Valuable document or security document (1) according to any one of the preceding claims, **characterised in that** the at least one sensor (3) comprises at least one haptically actuatable switching element.

9. Valuable document or security document (1) according to claim 8, **characterised in that** the at least one haptically actuatable switch element is configured as a keyboard for detecting a sequence of characters, wherein the user interaction comprises a detection of a sequence of characters.

10. Valuable document or security document (1) according to any one of the preceding claims, **characterised in that** at least a part of the at least two individually actuatable lighting means (5, 5.1-x, 5.2-x) is arranged uniformly distributed along a closed contour.

11. Valuable document or security document (1) according to claim 10, **characterised in that** the closed contour enclosed the at least one sensor (3) circumferentially.

12. Valuable document or security document (1) according to any one of the preceding claims, **characterised in that** at least a part of the at least two individually actuatable lighting means (5, 5.1-x, 5.2-x) is arranged on grid points of a regular two-dimensional grid (11).

13. Valuable document or security document (1) according to any one of the preceding claims, **characterised in that** the document body (2) comprises an antenna (9), which is configured in such a way that energy necessary for operating the electronic circuit (7) and the at least two individually actuatable lighting means (5, 5.1-x, 5.2-x) can be coupled in and provided by means of an electromagnetic field via the antenna (9).

14. Method for issuing an optical acknowledgment to a value document or security document (1), comprising the steps:
Detection of at least one user interaction by at least one sensor (3), on or at a document body (2) of the value document or security document (1),
evaluation of the at least one user interaction by an electronic circuit (7) of the document body (2),
provision of a signal pattern for producing a light pattern (20) for at least two lighting means (5, 5.1-x, 5.2-x), visually detectable via the an upper side (6) and an under side of the document body (2) and individually actuatable, by an electronic circuit (7), wherein the signal pattern is provided on the basis of the evaluated user interaction,
issue of an optical acknowledgement in the form of the light pattern (20) by individual actuation of the at least two individually actuatable lighting means (5, 5.1-x, 5.2-x) in accordance with the signal pattern provided by the electronic circuit (7).

15. Method according to claim 14, **characterised in that** there are two different types of signal patterns, wherein one static signal pattern comprises a temporally unchangeable actuation of the at least two individually actuatable lighting means, such that a static light pattern is formed, and wherein a dynamic signal pattern comprises a temporally changeable actuation of the at least two individually actuatable lighting means (5, 5.1-x, 5.2-x), such that a dynamic light pattern is formed, wherein, depending on the result from the evaluation of the user interaction, a dynamic light pattern or a static light pattern is produced.

16. Method according to claim 14 or 15, **characterised in that** the signal pattern is formed in each case in such a way that, by means of at least one of the at least two individually actuatable lighting means (5, 5.1-x, 5.2-x), coloured light is produced, such that the light pattern (20) comprises one or more colours.

17. Method according to any one of claims 14 to 16, **characterised in that** the energy necessary to operate the electronic circuit (7) and the at least two individually actuatable lighting means (5, 5.1-x, 5.2-x) is coupled in and provided by means of an electromagnetic field via a corresponding antenna (9) of the value or security document (1).

## Revendications

1. Document de valeur ou de sécurité (1), comprenant :
un corps de document (2) avec un côté supérieur (6) et un côté inférieur opposé au côté supérieur (6),
un circuit électronique (7) et
au moins un capteur (3) pour la détection d'au moins une interaction d'utilisateur,
**caractérisé en ce que**
le corps de document (2) présente au moins deux moyens d'éclairage (5, 5.1-x, 5.2-x) détectables visuellement sur le côté supérieur (6) et le côté inférieur, raccordés au circuit électronique (7) et commandables individuellement par celui-ci pour la génération d'un motif lumineux (20), et
dans lequel le circuit électronique (7) est réalisé de manière à évaluer l'au moins une interaction d'utilisateur, à fournir un motif de signal sur la base de l'interaction d'utilisateur évaluée et à émettre, sur la base du motif de signal, le motif lumineux (20) au niveau des au moins deux moyens d'éclairage (5, 5.1-x, 5.2-x) commandables individuellement.

2. Document de valeur ou de sécurité (1) selon la revendication 1, **caractérisé en ce que** le corps de document (2) présente au niveau du côté supérieur (6) et du côté inférieur au moins un autre moyen d'éclairage commandable individuellement, dans lequel l'au moins un autre moyen d'éclairage est couplé à au moins un des au moins deux moyens d'éclairage (5, 5.1-x, 5.2-x) commandables individuellement de sorte que ceux-ci puissent être commandés simultanément.

3. Document de valeur ou de sécurité (1) selon l'une quelconque des revendications précédentes, **caractérisé en ce qu'**au moins une partie des au moins deux moyens d'éclairage (5, 5.1-x, 5.2-x) commandables individuellement émet un spectre différent par rapport à une autre partie des au moins deux moyens d'éclairage (5, 5.1-x, 5.2-x) commandables individuellement.

4. Document de valeur ou de sécurité (1) selon l'une quelconque des revendications précédentes, **caractérisé en ce que** les au moins deux moyens d'éclairage (5, 5.1-x, 5.2-x) commandables individuellement sont réalisés respectivement en tant que LED ou OLED.

5. Document de valeur ou de sécurité (1) selon la revendication 3 ou 4, **caractérisé en ce qu'**au moins un des au moins deux moyens d'éclairage (5, 5.1-x, 5.2-x) commandables individuellement est réalisé de telle manière que le spectre émis par ce moyen d'éclairage puisse être modifié en cas de commande correspondante par le circuit électronique (7).

6. Document de valeur ou de sécurité (1) selon l'une quelconque des revendications précédentes, **caractérisé en ce que** l'au moins un capteur (3) est un capteur biométrique (12) pour la détection d'une information biométrique, et dans lequel l'interaction d'utilisateur comprend une détection d'une information biométrique.

7. Document de valeur ou de sécurité (1) selon la revendication 6, **caractérisé en ce que** le capteur biométrique (12) est un capteur d'empreinte digitale (4) pour la détection d'une empreinte digitale, dans lequel l'interaction d'utilisateur comprend une détection d'une empreinte digitale.

8. Document de valeur ou de sécurité (1) selon l'une quelconque des revendications précédentes, **caractérisé en ce que** l'au moins un capteur (3) comprend au moins un élément de commutation actionnable par voie haptique.

9. Document de valeur ou de sécurité (1) selon la revendication 8, **caractérisé en ce que** l'au moins un élément de commutation actionnable par voie haptique est réalisé en tant que clavier pour la détection d'une suite de caractères, dans lequel l'interaction d'utilisateur comprend une détection d'une suite de caractères.

10. Document de valeur ou de sécurité (1) selon l'une quelconque des revendications précédentes, **caractérisé en ce qu'**au moins une partie des au moins deux moyens d'éclairage (5, 5.1-x, 5.2-x) commandables individuellement est disposée répartie uniformément le long d'un contour fermé.

11. Document de valeur ou de sécurité (1) selon la revendication 10, **caractérisé en ce que** le contour fermé entoure sur le pourtour l'au moins un capteur (3).

12. Document de valeur ou de sécurité (1) selon l'une quelconque des revendications précédentes, **caractérisé en ce qu'**au moins une partie des au moins deux moyens d'éclairage (5, 5.1-x, 5.2-x) commandables individuellement est disposée sur des points de grille d'une grille (11) à deux dimensions régulières.

13. Document de valeur ou de sécurité (1) selon l'une quelconque des revendications précédentes, **caractérisé en ce que** le corps de document (2) comprend une antenne (9) qui est réalisée de telle manière qu'une énergie nécessaire au fonctionnement du circuit électronique (7) et des au moins deux moyens d'éclairage (5, 5.1-x, 5.2-x) commandables individuellement puisse être injectée et fournie au moyen d'un champ électromagnétique par le biais de l'antenne (9).

14. Procédé d'émission d'une réponse optique au niveau d'un document de valeur ou de sécurité (1) comprenant les étapes suivantes :
la détection d'au moins une interaction d'utilisateur par au moins un capteur (3) sur ou au niveau d'un corps de document (2) du document de valeur ou de sécurité (1),
l'évaluation de l'au moins une interaction d'utilisateur par un circuit électronique (7) du corps de document (2), la fourniture d'un motif de signal pour la génération d'un motif lumineux (20) pour au moins deux moyens d'éclairage (5, 5.1-x, 5.2-x) commandables individuellement détectables visuellement sur un côté supérieur (6) et un côté inférieur du corps de document (2) par le circuit électronique (7), dans lequel le motif de signal est fourni sur la base de l'interaction d'utilisateur évaluée,
l'émission d'une réponse optique sous la forme du motif lumineux (20) par commande individuelle des au moins deux moyens d'éclairage (5, 5.1-x, 5.2-x) commandables individuellement selon le motif de signal fourni par le circuit électronique (7).

15. Procédé selon la revendication 14, **caractérisé en ce qu'**il y a deux types différents de motifs de signal, dans lequel un motif de signal statique comprend une commande non modifiable temporellement des au moins deux moyens d'éclairage commandables individuellement de sorte qu'un motif lumineux statique soit réalisé, et dans lequel un motif de signal dynamique comprend une commande modifiable temporellement des au moins deux moyens d'éclairage (5, 5.1-x, 5.2-x) commandables individuellement de sorte qu'un motif lumineux dynamique soit réalisé, dans lequel en fonction d'un résultat de l'évaluation de l'interaction d'utilisateur un motif lumineux dynamique ou un motif lumineux statique est généré.

16. Procédé selon l'une quelconque des revendications 14 ou 15, **caractérisé en ce que** le motif de signal est réalisé respectivement de sorte qu'au moyen d'au moins un des au moins deux moyens d'éclairage (5, 5.1-x, 5.2-x) commandables individuellement de la lumière colorée soit générée de sorte que le motif lumineux (20) présente une ou plusieurs couleurs.

17. Procédé selon l'une quelconque des revendications 14 à 16, **caractérisé en ce qu'**une énergie nécessaire au fonctionnement du circuit électronique (7) et des au moins deux moyens d'éclairage (5, 5.1-x, 5.2-x) commandables individuellement est injectée et fournie au moyen d'un champ électromagnétique par le biais d'une antenne (9) correspondante du document de valeur ou de sécurité (1).
